# EUROPÄISCHE PATENTSCHRIFT

(11) **EP 2 651 710 B1**
(45) Veröffentlichungstag und Bekanntmachung des Hinweises auf die Patenterteilung: **08.01.2020**
(21) Anmeldenummer: 11779710.0
(22) Anmeldetag: 11.11.2011
(51) Int. Cl.: B60S 1/38, B60S 1/40

(54) **WISCHVORRICHTUNG**
WIPER DEVICE
SYSTÈME D'ESSUIE-GLACE

(30) Priorität: 13.12.2010 DE 102010062917
(43) Veröffentlichungstag der Anmeldung: 23.10.2013
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2011/069908
(87) Internationale Veröffentlichungsnummer: WO 2012/079868

(56) Entgegenhaltungen:
- EP-A2- 0 141 186
- EP-A2- 2 143 603
- WO-A2-2007/122568
- DE-A1-102009 000 762
- FR-A1- 2 868 378
- FR-A1- 2 929 216
- US-A1- 2004 244 137

## Beschreibung

### Stand der Technik

Die Erfindung geht aus von einer Wischvorrichtung nach dem Oberbegriff des Patentanspruchs 1 und von einer Wischblattadaptereinheit nach Anspruch 8.

Es ist bereits eine Wischvorrichtung für eine Kraftfahrzeugscheibe, mit einer Wischarmadaptereinheit und einer Wischblattadaptereinheit, die in einem montierten Zustand einen Formschluss bilden, bekannt (siehe z.B. Dokumente WO2007122568 und FR2929216 A1).

### Offenbarung der Erfindung

Die Erfindung geht aus von einer Wischvorrichtung für eine Kraftfahrzeugscheibe, mit einer Wischarmadaptereinheit und einer Wischblattadaptereinheit, die in einem montierten Zustand einen Formschluss bilden.

Es wird vorgeschlagen, dass die Wischvorrichtung ein an der Wischblattadaptereinheit fest angeordnetes Umhausungsmittel aufweist, das dazu vorgesehen ist, die Wischarmadaptereinheit in einer linearen Einschubbewegung aufzunehmen, wodurch eine besonders einfache Kopplung der Wischblattadaptereinheit mit der Wischarmadaptereinheit erreicht werden kann. Unter einer "Wischblattadaptereinheit" soll in diesem Zusammenhang insbesondere eine Adaptereinheit verstanden werden, die einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit der Wischarmadaptereinheit bereitzustellen. Bevorzugt weist die Wischblattadaptereinheit einen Grundkörper auf, der eine Kopplungsfläche für die Kopplung und/oder Kontaktierung der Wischarmadaptereinheit bereitstellt. Unter einer "Wischarmadaptereinheit" soll in diesem Zusammenhang insbesondere eine Adaptereinheit verstanden werden, die einen Kontaktbereich zu einem Wischarmbauteil aufweist und mit dem Wischarmbauteil unverlierbar verbunden und dazu vorgesehen ist, einen Kopplungsbereich des Wischarmbauteils für eine Kopplung und/oder Kontaktierung mit der Wischblattadaptereinheit bereitzustellen. Unter "vorgesehen" soll in diesem Zusammenhang insbesondere speziell ausgestattet und/oder ausgelegt verstanden werden. Unter einem "montierten Zustand" soll in diesem Zusammenhang insbesondere ein Zustand verstanden werden, in dem die Wischblattadaptereinheit und die Wischarmadaptereinheit miteinander gekoppelt sind. Unter einer "Längsrichtung" soll in diesem Zusammenhang insbesondere eine Richtung verstanden werden, die sich zumindest im Wesentlichen parallel zu einer Haupterstreckungsrichtung der Wischarmadaptereinheit erstreckt. Unter "im Wesentlichen" soll in diesem Zusammenhang insbesondere eine Abweichung von weniger als 10° verstanden werden. Unter einem "Umhausungsmittel" soll dabei in diesem Zusammenhang insbesondere ein Mittel verstanden werden, das in zumindest einem montierten Zustand eine wesentlich sichtbare Außenfläche bildet und einen Aufnahmebereich für die Wischarmadaptereinheit bereitstellt. Unter "wesentlich sichtbar" soll in diesem Zusammenhang insbesondere auf einen Blick erkennbar verstanden werden.

Erfindungsgemäß wird vorgeschlagen, dass die Wischblattadaptereinheit ein Arretierungsmittel aufweist, das dazu vorgesehen ist, eine Ausschubbewegung der Wischarmadaptereinheit im montierten Zustand zu vermeiden, wodurch eine besonders sichere Kopplung der Wischblattadaptereinheit mit der Wischarmadaptereinheit erreicht werden kann.

Eine besonders einfache Montage der Wischarmadaptereinheit mit der Wischblattadaptereinheit wird erfindungsgemäß erreicht, wenn das Arretierungsmittel als Rastmittel ausgebildet ist. Unter einem "Rastmittel" soll in diesem Zusammenhang insbesondere ein Mittel verstanden werden, das bei einem Montageablauf eine elastische Verformung erfährt.

Erfindungsgemäß ist das Rastmittel einstückig mit einem Grundkörper der Wischblattadaptereinheit ausgebildet, somit kann die Wischvorrichtung besonders einfach hergestellt werden.

Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Ferner wird vorgeschlagen, dass das Arretierungsmittel um eine Schwenkachse schwenkbar gelagert ist. Dadurch kann eine Montage der Wischarmadaptereinheit mit der Wischblattadaptereinheit auf besonders einfache Weise erfolgen.

Ist die Schwenkachse zumindest im Wesentlichen parallel zu einer Längsrichtung der Wischarmadaptereinheit angeordnet, kann eine Kopplung der Wischblattadaptereinheit mit der Wischarmadaptereinheit auf besonders sichere Weise erreicht werden. Unter "im Wesentlichen" soll in diesem Zusammenhang insbesondere eine Abweichung von weniger als 10° verstanden werden.

In einer weiteren Ausgestaltung wird vorgeschlagen, dass die Schwenkachse zumindest im Wesentlichen parallel zu einer Querrichtung der Wischarmadaptereinheit angeordnet ist, wodurch ein besonders einfacher Aufbau der Wischarmadaptereinheit erreicht werden kann. Unter einer "Querrichtung" soll in diesem Zusammenhang insbesondere eine Richtung verstanden werden, die senkrecht zur Längsrichtung und senkrecht zu einer Vertikalrichtung steht und parallel zu einer Wischebene verläuft. Unter einer "Wischebene" soll in diesem Zusammenhang insbesondere eine idealisierte Ebene verstanden werden, die von einem an der Wischblattadaptereinheit befestigten Wischblatt in einem Betriebszustand gewischt wird. Unter einer "Vertikalrichtung" soll dabei in diesem Zusammenhang insbesondere eine Richtung verstanden werden, die senkrecht zur Wischebene steht.

Bildet das Umhausungsmittel in zumindest einem Betriebszustand zumindest einen Großteil einer sichtbaren Außenfläche der Wischblattadaptereinheit, kann die Wischvorrichtung besonders robust ausgestaltet werden. Unter einem "Großteil" soll in diesem Zusammenhang insbesondere mehr als 50%, bevorzugt mehr als 70% verstanden werden.

Weist das Umhausungsmittel zumindest eine wenigstens zum Großteil geschlossene Seitenwand auf, kann die Wischvorrichtung vorteilhaft vor äußeren Einflüssen, wie beispielsweise Wasser, geschützt werden.

In einer weiteren Ausgestaltung wird vorgeschlagen, dass die Wischvorrichtung zumindest ein Sicherungsmittel aufweist, das dazu vorgesehen ist, eine Bewegung des Arretierungsmittels in zumindest einem Betriebszustand zu vermeiden, wodurch eine Betriebssicherheit der Wischvorrichtung vorteilhaft erhöht werden kann.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a und 1b: eine perspektivische Ansicht einer Wischvorrichtung in einem Montageablauf,
- Fig. 2a bis 2c: eine perspektivische Ansicht eines weiteren Ausführungsbeispiels einer Wischvorrichtung in einem Montageablauf,
- Fig. 3a bis 3c: eine perspektivische Ansicht eines weiteren Ausführungsbeispiels einer Wischvorrichtung in einem Montageablauf,
- Fig. 4a bis 4c: eine perspektivische Ansicht eines weiteren Ausführungsbeispiels einer Wischvorrichtung in einem Montageablauf,
- Fig. 5a bis 5c: eine perspektivische Ansicht eines weiteren Ausführungsbeispiels einer Wischvorrichtung in einem Montageablauf und
- Fig. 6a und 6b: eine perspektivische Ansicht eines weiteren Ausführungsbeispiels einer Wischvorrichtung in einem Montageablauf.

### Beschreibung der Ausführungsbeispiele

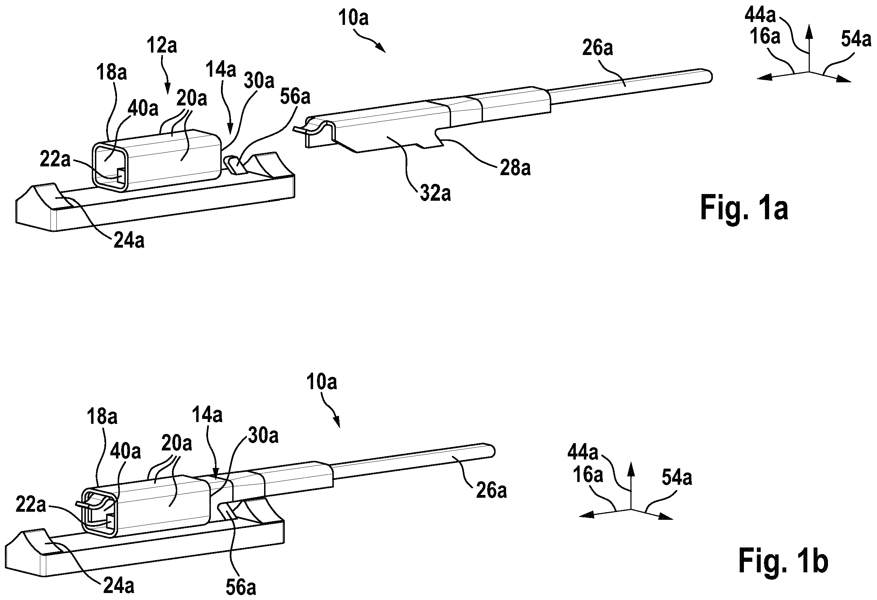

Figur 1a zeigt eine erfindungsgemäße Wischvorrichtung mit einer Wischarmadaptereinheit 10a und einer Wischblattadaptereinheit 12a in einem geöffneten Zustand.

Die Wischblattadaptereinheit 12a weist einen Grundkörper 22a auf, der mit einem Wischblatt 24a verbunden ist. Am Grundkörper 22a ist ein Umhausungsmittel 18a fest angeordnet, welches teilweise auf dem Wischblatt 24a aufliegt.

Das Umhausungsmittel 18a weist drei Seitenwände 20a auf, die jeweils geschlossen sind und einen Großteil einer sichtbaren Außenfläche der Wischblattadaptereinheit 12a bilden. In einer Längsrichtung 16a ist das Umhausungsmittel 18a geöffnet und ermöglicht es damit, die Wischarmadaptereinheit 10a in einer linearen Einschubbewegung aufzunehmen.

Die Wischarmadaptereinheit 10a ist einstückig mit einem Wischarm 26a ausgebildet. Es ist jedoch in diesem Zusammenhang auch denkbar, die Wischarmadaptereinheit 10a getrennt vom Wischarm 26a auszubilden und über ein geeignetes Verbindungselement miteinander zu verbinden.

Figur 1b zeigt die Wischvorrichtung in einem montierten Zustand. Die Wischarmadaptereinheit 10a ist in das Umhausungsmittel 18a eingeschoben. Seitenwände 32a der Wischarmadaptereinheit 10a schließen bündig mit einer Innenfläche 40a der drei Seitenwände 20a der Wischblattadaptereinheit 12a ab. Eine Bewegung der Wischarmadaptereinheit 10a in einer Querrichtung 54a und in eine Vertikalrichtung 44a ist damit vermieden.

Ein an der Wischblattadaptereinheit 12a angeordnetes Arretierungsmittel 14a, welches als einstückig mit dem Grundkörper 22a ausgebildetes Rastmittel 56a ausgebildet ist, schließt bündig mit Rückanschlägen 28a der Wischarmadaptereinheit 10a ab. Das Rastmittel 56a ist an einer Öffnung 30a des Umhausungsmittels 18a angeordnet und wird bei einem Einschub der Wischarmadaptereinheit 12a in das Umhausungsmittel 18a in Querrichtung 54a aus einer Ausgangsposition ausgelenkt. Im montierten Zustand bewegt sich das Rastmittel 56a zurück in seine Ausgangsposition.

Eine Ausschubbewegung der Wischarmadaptereinheit 10a parallel zur Längsrichtung 16a ist dadurch vermieden. Die Wischarmadaptereinheit 10a bildet mit der Wischblattadaptereinheit 12a einen Formschluss.

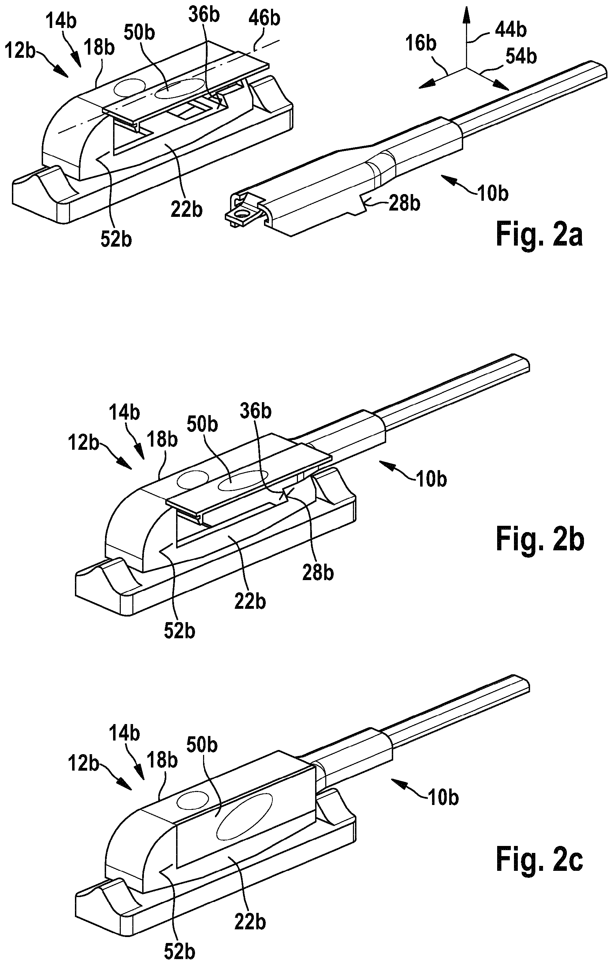

In den Figuren 2 bis 4 sind fünf weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in der Figur 1 durch die Buchstaben b bis f in den Bezugszeichen der Ausführungsbeispiele der Figuren 2 bis 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 2a zeigt ein weiteres Ausführungsbeispiel einer Wischvorrichtung mit einer Wischarmadaptereinheit 10b und einer Wischblattadaptereinheit 12b in einem geöffneten Zustand. Die Wischarmadaptereinheit 10b entspricht der Wischarmadaptereinheit 10a aus dem ersten Ausführungsbeispiel.

Die Wischblattadaptereinheit 12b weist ein Umhausungsmittel 18b sowie ein um eine Schwenkachse 46b schwenkbar gelagertes Arretierungsmittel 14b auf, das als Abdeckklappe 50b ausgebildet ist. Die Schwenkachse 46b ist im Wesentlichen parallel zu einer Längsrichtung 16b angeordnet.

Die Wischblattadaptereinheit 12b weist ferner einen Grundkörper 22b auf, der einstückig mit dem Umhausungsmittel 18b ausgebildet ist. Das Umhausungsmittel 18b bildet einen Großteil einer sichtbaren Außenfläche 52b der Wischblattadaptereinheit 12b. Am Grundkörper 22b ist darüber hinaus ein Gegenanschlag 36b angeordnet.

Die Abdeckklappe 50b ist seitlich an der Wischblattadaptereinheit 12b angeordnet und ermöglicht somit eine Aufnahme der Wischarmadaptereinheit 10b in einer linearen Bewegung, die im Wesentlichen parallel zu einer Querrichtung 54b verläuft.

Figur 2b zeigt einen zweiten Montageschritt, in welchem die Wischarmadaptereinheit 10b in den Grundkörper 22b eingeschoben ist. Die Außenfläche 52b schränkt eine Bewegungsfreiheit der Wischarmadaptereinheit 10b in eine Vertikalrichtung 44b ein.

Der Gegenanschlag 36b bildet einen Formschluss mit einem Rückanschlag 28b der Wischarmadaptereinheit 10b. Eine Bewegungsfreiheit der Wischarmadaptereinheit 10b ist dadurch in Längsrichtung 16b eingeschränkt. Eine Bewegung der Wischarmadaptereinheit 10b ist lediglich parallel zur Querrichtung 54b möglich.

Figur 2c zeigt die Wischvorrichtung in einem montierten Zustand. Die Abdeccklappe 50b ist geschlossen und schließt bündig mit der Außenfläche 52b der Wischblattadaptereinheit 12b ab. Dadurch ist die Wischarmadaptereinheit 10b in ihrer Bewegungsfreiheit in Querrichtung 54b eingeschränkt.

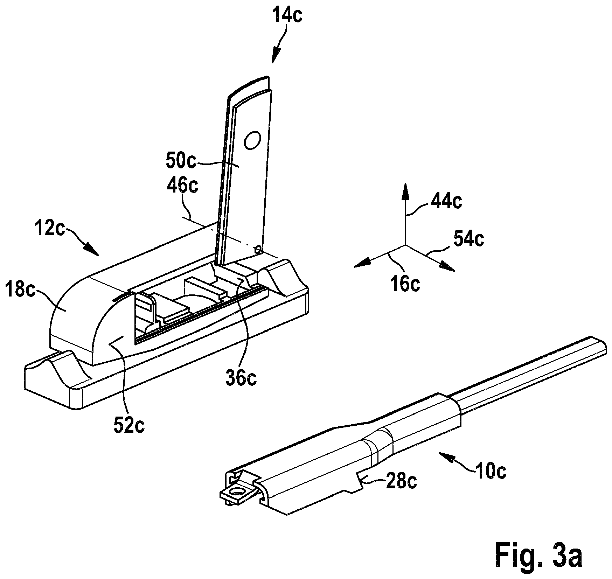

Figur 3a zeigt ein weiteres Ausführungsbeispiel einer Wischvorrichtung mit einer Wischarmadaptereinheit 10c und einer Wischblattadaptereinheit 12c in einem geöffneten Zustand. Die Wischarmadaptereinheit 10c entspricht der Wischarmadaptereinheit 10a aus dem ersten Ausführungsbeispiel.

Die Wischblattadaptereinheit 12c weist ein Umhausungsmittel 18c mit einem Arretierungsmittel 14c, das als Abdeckklappe 50c ausgebildet ist, auf. Die Abdeccklappe 50c ist um eine Schwenkachse 46c schwenkbar gelagert. Die Schwenkachse 46c ist im Wesentlichen parallel zu einer Querrichtung 54c der Wischarmadaptereinheit 10c angeordnet.

Das Umhausungsmittel 18c weist eine sichtbare Außenfläche 52c der Wischblattadaptereinheit 12c auf. Ferner ist am Umhausungsmittel 18c ein Gegenanschlag 36c angeordnet.

Die Abdeckklappe 50c ist seitlich an der Wischblattadaptereinheit 12c angeordnet und ermöglicht somit eine Aufnahme der Wischarmadaptereinheit 10c in einer linearen Bewegung, die im Wesentlichen parallel zur Querrichtung 54c verläuft.

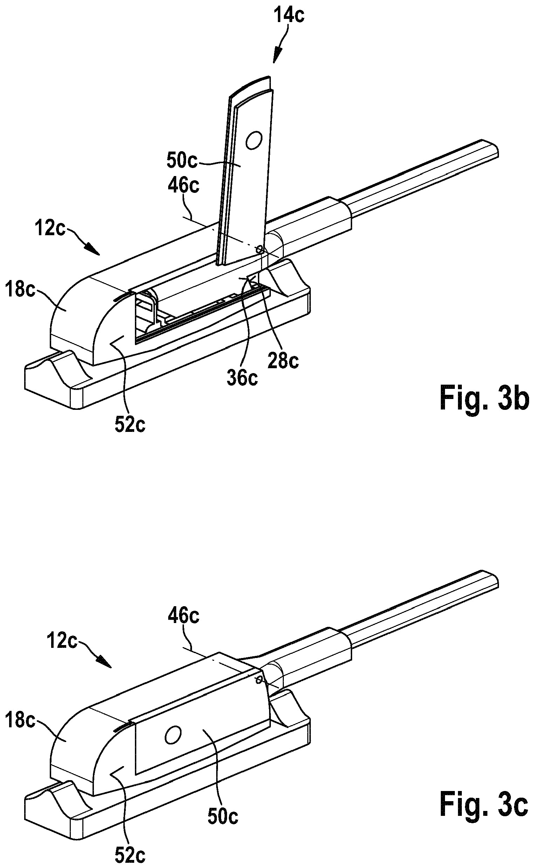

Figur 3b zeigt die Wischvorrichtung in einem zweiten Montageschritt, in welchem die Wischarmadaptereinheit 10c in das Umhausungsmittel 18c eingeschoben ist. Die Außenfläche 52c schränkt eine Bewegungsfreiheit der Wischarmadaptereinheit 10c in eine Vertikalrichtung 44c ein.

Der Gegenanschlag 36c bildet einen Formschluss mit einem Rückanschlag 28c der Wischarmadaptereinheit 10c. Eine Bewegungsfreiheit der Wischarmadaptereinheit 10c ist dadurch in eine Längsrichtung 16c eingeschränkt. Eine Bewegung der Wischarmadaptereinheit 10c ist lediglich in Querrichtung 54c möglich.

Figur 3c zeigt die Wischvorrichtung in einem montierten Zustand. Die Abdeccklappe 50c ist um die Schwenkachse 46c geschwenkt und schließt bündig mit der Außenfläche 52c der Wischblattadaptereinheit 12c ab. Die Wischarmadaptereinheit 10c ist durch die Abdeckklappe 50c in ihrer Bewegungsfreiheit in Querrichtung 54c eingeschränkt.

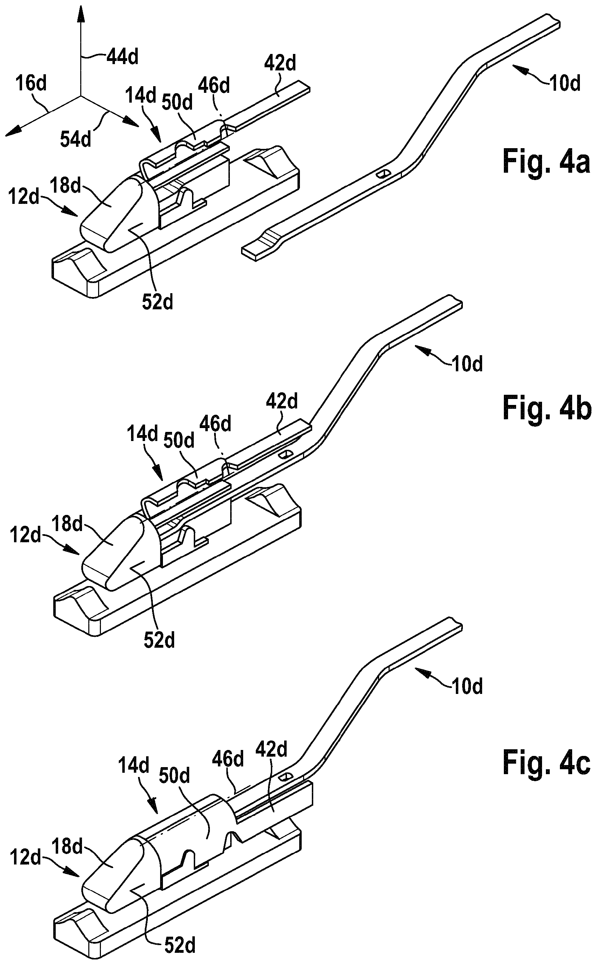

Figur 4a zeigt ein weiteres Ausführungsbeispiel einer Wischvorrichtung mit einer Wischarmadaptereinheit 10d und einer Wischblattadaptereinheit 12d in einem geöffneten Zustand.

Die Wischblattadaptereinheit 12d weist ein Umhausungsmittel 18d auf, mit Außenflächen 52d, sowie mit einem Arretierungsmittel 14d, das von einer Abdeccklappe 50d gebildet ist, die um eine Schwenkachse 46d schwenkbar gelagert ist. Die Schwenkachse 46d erstreckt sich parallel zu einer Längsrichtung 16d.

Figur 4b zeigt die Wischvorrichtung in einem zweiten Montageschritt. Die Wischarmadaptereinheit 10d ist in das Umhausungsmittel 18d der Wischblattadaptereinheit 12d eingeschoben. In eine Vertikalrichtung 44d, sowie in die Längsrichtung 16d ist die Wischarmadaptereinheit 10d durch die Außenflächen 52d in ihrer Bewegungsfreiheit eingeschränkt. Eine Bewegung der Wischarmadaptereinheit 10d ist lediglich in eine Querrichtung 54d möglich.

Figur 4c zeigt die Wischvorrichtung in einem montierten Zustand. Die Abdeccklappe 50d ist an das Umhausungsmittel 18d geschwenkt und schließt mit den Außenflächen 52d bündig ab. An der Abdeckklappe 50d angeordnete Sicherungsmittel 42d rasten am Umhausungsmittel 18d ein und vermeiden ein Rückschwenken der Abdeckklappe 50d zurück in den geöffneten Zustand.

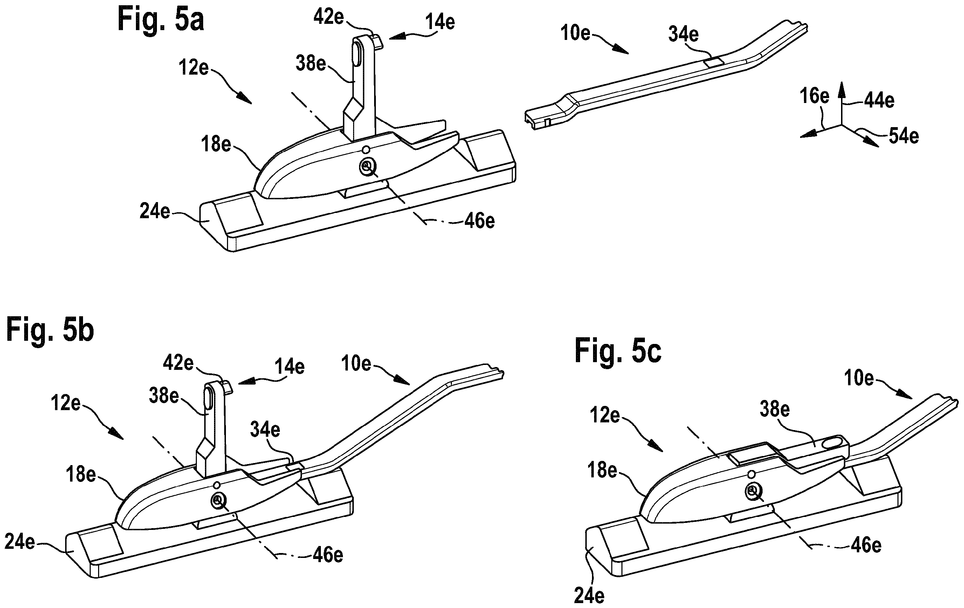

Figur 5a zeigt ein weiteres Ausführungsbeispiel einer Wischvorrichtung mit einer Wischarmadaptereinheit 10e und einer Wischblattadaptereinheit 12e in einem geöffneten Zustand. Die Wischarmadaptereinheit 10e weist eine Befestigungsausnehmung 34e auf und ist einstückig mit einem Wischarm 26e ausgebildet.

Die Wischblattadaptereinheit 12e weist ein fest angeordnetes Umhausungsmittel 18e auf, das teilweise auf einem Wischblatt 24e aufliegt und in eine Längsrichtung 16e geöffnet ist. Am Umhausungsmittel 18e ist ein als Hebelarm 38e ausgebildetes Arretierungsmittel 14e schwenkbar um eine Schwenkachse 46e gelagert. Der Hebelarm 38e weist an einem Ende ein Sicherungsmittel 42e auf, das als Befestigungsstift ausgebildet ist. Die Schwenkachse 46e ist im Wesentlichen parallel zu einer Querrichtung 54e angeordnet.

Figur 5b zeigt die Wischvorrichtung in einem zweiten Montageschritt. Die Wischarmadaptereinheit 10e ist in das Umhausungsmittel 18e der Wischblattadaptereinheit 12e in Längsrichtung 16e eingeschoben. Eine Bewegung der Wischarmadaptereinheit 10e relativ zur Wischblattadaptereinheit 12e in eine Vertikalrichtung 44e oder in die Querrichtung 54e ist damit vermieden.

Figur 5c zeigt die Wischvorrichtung in einem montierten Zustand. Der Hebelarm 38e ist um die Schwenkachse 46e geschwenkt und liegt auf der Wischarmadaptereinheit 10e auf. Das Sicherungsmittel 42e ist in die Befestigungsausnehmung 34e eingeführt und bildet mit dieser einen Formschluss. Dadurch ist eine Ausschubbewegung der Wischarmadaptereinheit 10e in Längsrichtung 16e vermieden.

Um ein Zurückschwenken des Hebelarms 38e in den geöffneten Zustand zu vermeiden, bildet das Sicherungsmittel 42e mit der Befestigungsausnehmung 34e zusätzlich einen Kraftschluss.

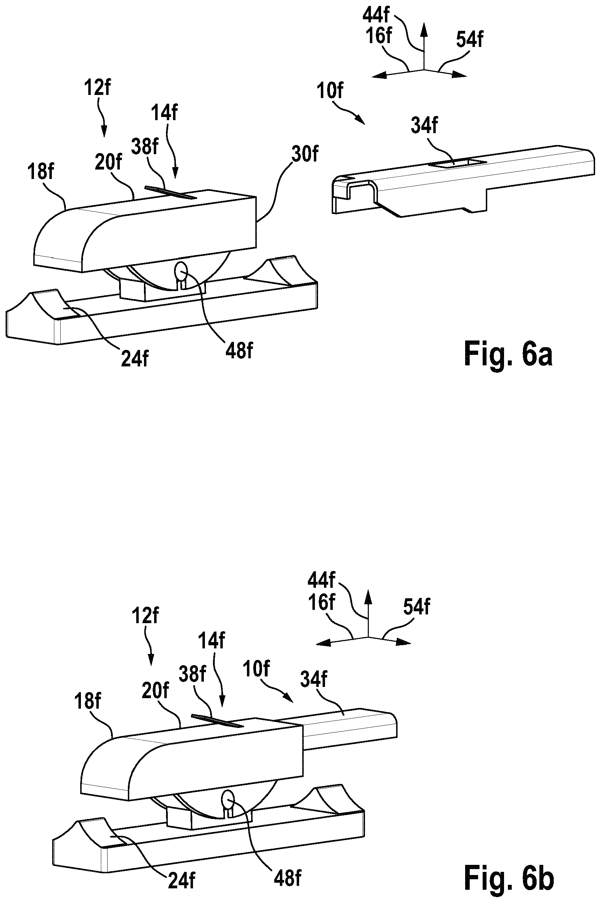

Figur 6a zeigt ein weiteres Ausführungsbeispiel einer Wischvorrichtung mit einer Wischarmadaptereinheit 10f und einer Wischblattadaptereinheit 12f in einem geöffneten Zustand. Die Wischarmadaptereinheit 10f entspricht der Wischarmadaptereinheit 10a aus dem ersten Ausführungsbeispiel.

Die Wischblattadaptereinheit 12f weist ein Umhausungsmittel 18f auf, das über ein Drehgelenk 48f mit einem Wischblatt 24f verbunden ist. An einer vom Wischblatt 24f abgewandten Seitenwand 20f des Umhausungsmittels 18f ist ein Arretierungsmittel 14f, das von einem schwenkbar gelagerten Hebelarm 38f gebildet ist, angeordnet. Das Umhausungsmittel 18f weist in Längsrichtung 16f eine Öffnung 30f auf.

Figur 6b zeigt die Wischvorrichtung in einem montierten Zustand. Die Wischarmadaptereinheit 10f ist in das Umhausungsmittel 18f eingeschoben. Eine Bewegungsfreiheit in eine Vertikalrichtung 44f und in eine Querrichtung 54f ist dadurch eingeschränkt. Durch ein Schwenken des Hebelarms 38f schließt dieser mit der Seitenwand 20f bündig ab. Gleichzeitig greift der Hebelarm 38f in eine Befestigungsausnehmung 34f der Wischarmadaptereinheit 10f ein, und vermeidet damit eine Ausschubbewegung der Wischarmadaptereinheit 10f.

## Patentansprüche

1. Wischvorrichtung für eine Kraftfahrzeugscheibe, mit einer Wischarmadaptereinheit (10a) und einer Wischblattadaptereinheit (12), die in einem montierten Zustand einen Formschluss bilden und mit einem an der Wischblattadaptereinheit (12a) fest angeordneten Umhausungsmittel (18a), das dazu vorgesehen ist, die Wischarmadaptereinheit (10a) in einer linearen Einschubbewegung aufzunehmen, wobei die Wischblattadaptereinheit (12a) ein als Rastmittel (56a) ausgebildetes Arretierungsmittel (14a) aufweist, das dazu vorgesehen ist, eine Ausschubbewegung der Wischarmadaptereinheit (10a) im montierten Zustand zu vermeiden, **dadurch gekennzeichnet, dass** das Arretierungsmittel bündig mit Rückanschlägen (28a) der Wischarmadaptereinheit (10a) abschließt und das Rastmittel (56a) an einer Öffnung (30a) des Umhausungsmittels (18a) angeordnet ist und bei einem Einschub der Wischarmadaptereinheit (12a) in das Umhausungsmittel (18a) in eine Querrichtung (54a), die senkrecht zur Längsrichtung und senkrecht zu einer Vertikalrichtung steht und parallel zu einer Wischebene verläuft, aus einer Ausgangsposition ausgelenkt wird, wobei das Rastmittel (56a) einstückig mit einem Grundkörper (22a) der Wischblattadaptereinheit (12a) ausgebildet ist und wobei der Grundkörper (22a) der Wischblattadaptereinheit (12a) einstückig mit dem Umhausungsmittel (18a) ausgebildet ist.

2. Wischvorrichtung nach einem der vorhergehenden Ansprüche, **dadurch gekennzeichnet, dass** das Arretierungsmittel (14b - 14e) relativ zu dem Umhausungsmittel (18b - 18e) der Wischblattadaptereinheit (12b - 12e) um eine Schwenkachse (46b - 46e) schwenkbar gelagert ist.

3. Wischvorrichtung nach Anspruch 2, **dadurch gekennzeichnet, dass** die Schwenkachse (46b; 46d) zumindest im Wesentlichen parallel zu einer Längsrichtung (16b; 16d) der Wischarmadaptereinheit (10b; 10d) angeordnet ist.

4. Wischvorrichtung zumindest nach Anspruch 2, **dadurch gekennzeichnet, dass** die Schwenkachse (46c; 46e) zumindest im Wesentlichen parallel zu einer Querrichtung (54c; 54e) der Wischarmadaptereinheit (10c; 10e) angeordnet ist.

5. Wischvorrichtung nach einem der vorhergehenden Ansprüche, **dadurch gekennzeichnet, dass** das Umhausungsmittel (18a - 18f) in zumindest einem Betriebszustand zumindest einen Großteil einer sichtbaren Außenfläche der Wischblattadaptereinheit (12a - 12f) bildet.

6. Wischvorrichtung nach einem der vorhergehenden Ansprüche, **dadurch gekennzeichnet, dass** das Umhausungsmittel (18a) zumindest eine wenigstens zum Großteil geschlossene Seitenwand (20a) aufweist.

7. Wischvorrichtung nach einem der vorhergehenden Ansprüche, **gekennzeichnet durch** zumindest ein Sicherungsmittel (42d; 42e), das dazu vorgesehen ist, eine Bewegung des Arretierungsmittels (14d; 14e) in zumindest einem Betriebszustand zu vermeiden.

8. Wischblattadaptereinheit einer Wischvorrichtung nach einem der vorhergehenden Ansprüche.

9. Wischblatt mit einer Wischblattadaptereinheit nach Anspruch 8.

## Claims

1. Wiper device for a motor vehicle window, with a wiper arm adapter unit (10a) and a wiper blade adapter unit (12) which form a positive connection in a mounted state, and with a housing means (18a), which is fixedly arranged on the wiper blade adapter unit (12a) and which is provided for receiving the wiper arm adapter unit (10a) in a linear push-in movement, wherein the wiper blade adapter unit (12a) has a locking means (14a) which is designed as latching means (56a) and which is provided for avoiding a push-out movement of the wiper arm adapter unit (10a) in the mounted state, **characterized in that** the locking means terminates flush with rear stops (28a) of the wiper arm adapter unit (10a), and the latching means (56a) is arranged at an opening (30a) of the housing means (18a) and, during an insertion of the wiper arm adapter unit (12a) into the housing means (18a), is deflected from a starting position in a transverse direction (54a) which is perpendicular to the longitudinal direction and perpendicular to a vertical direction and runs parallel to a wiping plane, wherein the latching means (56a) is formed in one piece with a basic body (22a) of the wiper blade adapter unit (12a), and wherein the basic body (22a) of the wiper blade adapter unit (12a) is formed in one piece with the housing means (18a).

2. Wiper device according to one of the preceding claims, **characterized in that** the locking means (14b - 14e) is pivotably mounted about a pivot axis (46b - 46e) relative to the housing means (18b - 18e) of the wiper blade adapter unit (12b - 12e).

3. Wiper device according to Claim 2, **characterized in that** the pivot axis (46b; 46d) is arranged at least substantially parallel to a longitudinal direction (16b; 16d) of the wiper arm adapter unit (10b; 10d).

4. Wiper device at least according to Claim 2, **characterized in that** the pivot axis (46c; 46e) is arranged at least substantially parallel to a transverse direction (54c; 54e) of the wiper arm adapter unit (10c; 10e).

5. Wiper device according to one of the preceding claims, **characterized in that** the housing means (18a - 18f) forms, in at least one operating state, at least a large part of a visible outer surface of the wiper blade adapter unit (12a - 12f).

6. Wiper device according to one of the preceding claims, **characterized in that** the housing means (18a) has at least one at least largely closed side wall (20a).

7. Wiper device according to one of the preceding claims, **characterized by** at least one securing means (42d; 42e) which is provided for avoiding a movement of the locking means (14d; 14e) in at least one operating state.

8. Wiper blade adapter unit of a wiper device according to one of the preceding claims.

9. Wiper blade having a wiper blade adapter unit according to Claim 8.

## Revendications

1. Dispositif essuie-glace pour une vitre de véhicule automobile, comprenant une unité adaptatrice de bras d'essuie-glace (10a) et une unité adaptatrice de balai d'essuie-glace (12) qui, dans un état monté, forment un assemblage par complémentarité de formes et comprenant un moyen de capotage (18a) monté à demeure sur l'unité adaptatrice de balai d'essuie-glace (12a), lequel est conçu pour accueillir l'unité adaptatrice de bras d'essuie-glace (10a) dans un mouvement d'enfichage linéaire, l'unité adaptatrice de balai d'essuie-glace (12a) possédant un moyen d'arrêt (14a) réalisé sous la forme d'un moyen d'encliquetage (56a) qui est conçu pour empêcher un mouvement de coulissement vers l'extérieur de l'unité adaptatrice de bras d'essuie-glace (10a) à l'état monté, **caractérisé en ce que** le moyen d'arrêt se termine à fleur avec des butées arrière (28a) de l'unité adaptatrice de bras d'essuie-glace (10a) et le moyen d'encliquetage (56a) est disposé au niveau d'une ouverture (30a) du moyen de capotage (18a) et, lors d'un enfichage de l'unité adaptatrice de bras d'essuie-glace (12a) dans le moyen de capotage (18a), est dévié depuis une position initiale dans une direction transversale (54a) qui est perpendiculaire à la direction longitudinale et perpendiculaire à une direction verticale et s'étend parallèlement à un plan d'essuyage, le moyen d'encliquetage (56a) étant réalisé d'un seul tenant avec un corps de base (22a) de l'unité adaptatrice de balai d'essuie-glace (12a) et le corps de base (22a) de l'unité adaptatrice de balai d'essuie-glace (12a) étant réalisé d'un seul tenant avec le moyen de capotage (18a) .

2. Dispositif essuie-glace selon l'une des revendications précédentes, **caractérisé en ce que** le moyen d'arrêt (14b-14e) est monté pivotant autour d'un axe de pivotement (46b-46e) par rapport au moyen de capotage (18b-18e) de l'unité adaptatrice de balai d'essuie-glace (12b-12e).

3. Dispositif essuie-glace selon la revendication 2, **caractérisé en ce que** l'axe de pivotement (46b ; 46d) est disposé au moins sensiblement en parallèle à une direction longitudinale (16b ; 16d) de l'unité adaptatrice de bras d'essuie-glace (10b ; 10d).

4. Dispositif essuie-glace au moins selon la revendication 2, **caractérisé en ce que** l'axe de pivotement (46c ; 46e) est disposé au moins sensiblement en parallèle à une direction transversale (54c ; 54e) de l'unité adaptatrice de bras d'essuie-glace (10c ; 10e).

5. Dispositif essuie-glace selon l'une des revendications précédentes, **caractérisé en ce que** le moyen de capotage (18a-18f), dans au moins un état opérationnel, forme au moins une grande partie d'une surface extérieure visible de l'unité adaptatrice de balai d'essuie-glace (12a-12f).

6. Dispositif essuie-glace selon l'une des revendications précédentes, **caractérisé en ce que** le moyen de capotage (18a) possède au moins une paroi latérale (20a) au moins en grande partie fermée.

7. Dispositif essuie-glace selon l'une des revendications précédentes, **caractérisé par** au moins un moyen de blocage (42d ; 42e) qui est conçu pour empêcher un mouvement du moyen d'arrêt (14d ; 14e) dans au moins un état opérationnel.

8. Unité adaptatrice de balai d'essuie-glace d'un dispositif essuie-glace selon l'une des revendications précédentes.

9. Balai d'essuie-glace comprenant une unité adaptatrice de balai d'essuie-glace selon la revendication 8.
